(19) Europäisches Patentamt / European Patent Office / Office européen des brevets

(11) **EP 3 012 333 B1**

(12) **EUROPEAN PATENT SPECIFICATION**

(45) Date of publication and mention
of the grant of the patent:
**09.01.2019 Bulletin 2019/02**

(21) Application number: **14814513.9**

(22) Date of filing: **17.06.2014**

(51) Int Cl.:
*C22B 1/00* (2006.01)   *B09B 3/00* (2006.01)
*B09B 5/00* (2006.01)   *C22B 7/00* (2006.01)
*C22B 9/10* (2006.01)   *C22B 11/00* (2006.01)
*C22B 13/02* (2006.01)   *C22B 3/00* (2006.01)
*C22B 59/00* (2006.01)

(86) International application number:
**PCT/JP2014/066038**

(87) International publication number:
**WO 2014/203895 (24.12.2014 Gazette 2014/52)**

(54) **METHOD OF RECOVERING METAL FROM WASTE ELECTRONIC SUBSTRATES**

VERFAHREN ZUR RÜCKGEWINNUNG VON METALL AUS ELEKTRONISCHEN
ABFALLSUBSTRATEN

PROCÉDÉ DE RÉCUPÉRATION DE MÉTAL À PARTIR DE DÉCHETS DE SUBSTRATS
ÉLECTRONIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.06.2013   JP 2013131123**
**10.03.2014   JP 2014046258**

(43) Date of publication of application:
**27.04.2016   Bulletin 2016/17**

(73) Proprietor: **Tottori Prefecture
Tottori 680-8570 (JP)**

(72) Inventors:
• **MONGI, Hideyuki**
**Tohaku-gun, Tottori 682-0704 (JP)**
• **NARUOKA, Tomohiro**
**Tohaku-gun, Tottori 682-0704 (JP)**
• **ARITA, Masakazu**
**Tohaku-gun, Tottori 682-0704 (JP)**
• **IGURA, Takeshi**
**Tohaku-gun, Tottori 682-0704 (JP)**

(74) Representative: **Gulde & Partner
Patent- und Rechtsanwaltskanzlei mbB
Wallstraße 58/59
10179 Berlin (DE)**

(56) References cited:
CN-A- 102 925 691    JP-A- H0 796 264
JP-A- H09 157 769    JP-A- 2000 104 126
JP-A- 2004 068 082    JP-A- 2005 113 253

• CUI J ET AL: "Metallurgical recovery of metals
from electronic waste: A review", JOURNAL OF
HAZARDOUS MATERIALS, ELSEVIER,
AMSTERDAM, NL, vol. 158, no. 2-3, 30 October
2008 (2008-10-30), pages 228-256, XP024529239,
ISSN: 0304-3894, DOI:
10.1016/J.JHAZMAT.2008.02.001 [retrieved on
2008-02-08]

**Description**

**TECHNICAL FIELD**

The present invention relates to a method for recovering various types of metals (rare metal, noble metal, and other metals) from waste electronic substrates.

**BACKGROUND ART**

Electronic substrates of which circuit board is equipped with various electronic components such as a coil, a condenser, a resistor, and a semiconductor chip are installed in mobile phones, smart phones, personal computers and the like. These electronic substrates contain various types of metals (rare metal, noble metal, and other metals) derived from such electronic components and circuit boards.

A review of metallurgical processes for recovery of precious metals from electronic waste, comprising pyrometallurgical processing, hydrometallurgical processing, and biometallurgical processing, is given by J. Cui et al. (Journal of Hazardous Materials, Vol. 158 (2008), p. 228-256) .

JP H07-96264 A discloses a method for removing lead from refusal containing lead glass for preventing environmental pollution. The method comprises adding $Na_2O$ and a carbon source as reducing agent to the cut refuse and heating and melting the resulting mixture at 800°C or higher in an electric furnace to separate lead from the lead glass waste.

Another method for removing lead from discarded lead-containing cathode-ray tube (CRT) glass is described in CN 102925691 A. The method comprises crushing the CRT glass, uniformly mixing zero-valence iron to the obtained CRT glass powder, heating the mixture for 3 to 180 minutes at 610 to 960°C, cooling, and extracting metal lead from the $SiO_2$ meshy glass structure of the CRT glass.

As a method for treating waste electronic substrates, JP 2009-226302 A discloses crushing the waste electronic substrates, followed by carbonization using a rotary kiln. Subsequently, the resultant left in the rotary kiln is cracked, sieved, and then the metal is separated using a magnetic separator and an eddy current separator.

**SUMMARY OF THE INVENTION**

**PROBLEMS TO BE SOLVED BY THE INVENTION**

The method disclosed in Patent Literature 1 is suitable for recovering metals which are easily reduced, such as copper and silver. However, since many of the rare metals are difficult to reduce, it is difficult to recover such rare metals by the method of Patent Literature 1. In addition, even the metals which are easily reduced require many processes to recover the metal from the resultant after the carbonization, which is burdensome.

The present invention has been made in view of such circumstances, and the object of the present invention is to provide a method for efficiently recovering various metals such as rare metal, noble metal, and other metals from waste electronic substrates.

**MEANS FOR SOLVING THE PROBLEMS**

According to the present invention, a method for recovering metal from waste electronic substrates, comprising the processes of: a melting process to form a glass phase and a metal phase by melting waste electronic substrates and a glass together, the metal phase being derived from metal contained in at least one of the waste electronic substrates and the glass; a metal recovering process to separate and recover the metal phase from the glass phase; and an acid extraction process to allow the glass phase to come in contact with an acid solution; wherein: the glass phase comprises a first phase having silica as the main component and a second phase having higher solubility than the first phase with respect to the acid solution; and the second phase is dissolved in the acid solution together with a residual metal contained in the second phase, and the acid solution having the residual metal dissolved therein is recovered in the acid extraction process, is provided.

The present inventors have conducted studies on the method for efficiently recovering various metals from waste electronic substrates, and found that the followings can be achieved when the waste electronic substrates are melt together with glass. That is, among the metal simple substance or metal compound (for example, oxide, nitrides) contained in the glass and waste electronic substrates, metals which are easily reduced would form a metal phase (bulk of metal) at the bottom of the melt formed by melting the glass. Accordingly, metal could be recovered without conducting burdensome post treatments.

In addition, it became apparent that when the waste electronic substrates are melt together with glass, the glass phase formed together with the metal phase would comprise a first phase having silica as the main component, and a second phase having higher solubility with respect to acid solution. Since the rare metal derived from the waste electronic substrates is mainly contained in the second phase, the second phase can be dissolved in acid solution, followed by recovery of the acid solution, thereby recovering the rare metal easily.

As described, according to the present invention, metals which are easily reduced and metals which are difficult to reduce can both be recovered efficiently. In addition, it became apparent that this method can be utilized to recover the metal contained in glass in a case where the metal to be recovered is not contained in the waste electronic substrates and the metal to be recovered is contained only in the glass. Therefore, according to the present invention, the metal contained in at least one of the waste electronic substrates and glass can be recovered efficiently.

Hereinafter, various embodiments of the present invention are exemplified. The following embodiments can be combined with each other.

Preferably, the method further comprises the process of a residual metal recovering process to recover the residual metal dissolved in the acid solution.

Preferably, the melting process is conducted in the presence of a reducing agent added separately from the waste electronic substrates.

Preferably, the reducing agent is carbon.

Preferably, the melting process is conducted in the presence of a phase separation accelerator added separately from the waste electronic substrates.

Preferably, the phase separation accelerator is at least one selected from the group consisting of boron source, phosphorus source, iron source, and barium source.

Preferably, the method further comprises the process of a phase separation accelerator recovering process to recover the phase separation accelerator from the acid solution after the acid extraction process.

Preferably, the phase separation accelerator recovered in the phase separation accelerator recovering process is re-used.

Preferably, the melting process is conducted in the presence of at least one selected from the group consisting of alkali metal, alkaline earth metal, and Mg.

## BRIF DESCRIPTION OF THE DRAWINGS

FIG. 1 is a flow chart showing the procedure of the demonstration of the method for recovering metal in accordance with the embodiment of the present invention.
FIG. 2 is a graph showing the analytical results with respect to Si in the embodiment of the present invention.
FIG. 3 is a graph showing the analytical results with respect to Pb in the embodiment of the present invention.
FIG. 4 is a graph showing the analytical results with respect to Pb in the embodiment of the present invention.
FIG. 5 is a graph showing the analytical results with respect to Fe in the embodiment of the present invention.
FIG. 6 is a graph showing the analytical results with respect to Fe in the embodiment of the present invention.
FIG. 7 is a graph showing the analytical results with respect to Ni in the embodiment of the present invention.
FIG. 8 is a graph showing the analytical results with respect to Ni in the embodiment of the present invention.
FIG. 9 is a graph showing the analytical results with respect to Cu in the embodiment of the present invention.
FIG. 10 is a graph showing the analytical results with respect to Cu in the embodiment of the present invention.

## DESCRIPTION OF THE PREFERRED EMBODIMENTS

Hereinafter, the embodiment of the present invention will be described.

The method for recovering metal from waste electronic substrates according to one embodiment of the present invention comprises the processes of: a melting process to form a glass phase and a metal phase by melting waste electronic substrates and a glass together, the metal phase being derived from metal contained in at least one of the waste electronic substrates and the glass; a metal recovering process to separate and recover the metal phase from the glass phase; and an acid extraction process to allow the glass phase to come in contact with an acid solution; wherein: the glass phase comprises a first phase having silica as the main component and a second phase having higher solubility than the first phase with respect to the acid solution; and the second phase is dissolved in the acid solution together with a residual metal contained in the second phase, and the acid solution having the residual metal dissolved therein is recovered in the acid extraction process.

Hereinafter, each of the processes will be described in detail.

1. Melting Process

In the melting process, waste electronic substrates are melt together with glass, thereby forming a glass phase and a metal phase derived from the metal contained in at least one of the waste electronic substrates and the glass. The glass phase comprises a first phase having silica as the main component, and a second phase having higher solubility than the first phase with respect to acid solution.

The present embodiment mainly focuses on the waste electronic substrates, which are electronic substrates installed in disposed electronic devices (mobile phones, smart phones, personal computers and the like). In these electronic substrates, many electronic components such as a coil, a condenser, a resistor, and a semiconductor chip are provided on the circuit board, and each of the electronic components and the circuit board contain various types of metals. Accordingly, in the present embodiment, such various types of metals are recovered efficiently from the waste electronic substrates. As the metal to be recovered, rare metals (for example, Li, Be, Ti, V, Cr, Mn, Co, Ni, Ga, Ge, Se, Rb, Sr, Zr, Nb, Mo, Pd, In, Sb, Te, Cs, Ba, Hf, Ta, W, Re, Pt, Tl, Bi, Sc, Y, La, Ce, Pr, Nd, Pm, Sm, Eu, Gd, Tb, Dy, Ho, Er, Tm Yb, Lu), noble metals (Ag, Pd, Pt, Au), and other metals (Fe, Cu, Pb) can be mentioned. Sc, Y, La, Ce, Pr, Nd, Pm, Sm, Eu, Gd, Tb, Dy, Ho, Er, Tm, Yb, and Lu are also referred to as rare earth.

In the method of the present embodiment, only the waste electronic substrates can be treated, or substrates/matters other than the waste electronic substrates can be treated together. For example, among the electronic components, there are substrates/matters that are not provided on the circuit boards and are disposed. Such waste electronic components can be treated together with the waste electronic substrates. The metals to be recovered can be contained only in the waste electronic substrates, in both of the waste electronic substrates and the glass, or only in the glass. For example, when lead is to be recovered, waste electronic substrates containing no lead and lead glass can be melt together, thereby reducing the lead oxide in the lead glass by the organic compound contained in the waste electronic substrates to recover lead. The waste electronic substrates can serve as both of a metal source of the metal to be recovered and a reducing agent (carbon) source to obtain the metal simple substance by reducing the metal compound. Otherwise, the waste electronic substrates can contain no reducing agent and serve as only the metal source, or can contain no metal to be recovered and serve as only the reducing agent source.

In the method disclosed in Patent Literature 1, the waste electronic substrates are crushed, and then heat treatment is conducted with the crushed waste electronic substrates as they are. In the present embodiment, waste electronic substrates are melt together with the glass. When the waste electronic substrates are heated alone, carbon contained in the waste electronic substrates would be carbonized, and thus metal phase would not be formed. On the other hand, when the waste electronic substrates are melt together with the glass, the metal simple substance in the waste electronic substrates would flow as it is or the metal compounds in the waste electronic substrates (general term for metal oxides, metal nitrides, and the like) and the metal oxides in the glass would be reduced and flow as the metal simple substance, thereby gathering to form a metal phase. Then, the resulting portion would be a glass phase. Here, the "glass phase" is a phase having vitrified substance as its main component, and substances that are not vitrified can also be contained partially.

The mass ratio of the waste electronic substrates with respect to the glass is preferably 0.05 to 0.5, and specific examples are 0.05, 0.1, 0.15, 0.2, 0.25, 0.3, 0.4, and 0.5. The mass ratio may be within the range of the two values selected from these exemplified values. When the amount of the waste electronic substrates is too small, the amount of the metal recovered would become small, and when the amount of the waste electronic substrates is too large, it becomes difficult to form the metal phase.

There is no particular limitation regarding the type of the glass to be melt together with the waste electronic substrates, so long as it contains silica. In one example, the glass is a glass containing heavy metal (for example, lead, cadmium, chrome, arsenic, selenium, zinc, copper, iron, manganese, and nickel) and silica. Since the glass containing heavy metal cannot be disposed by landfill as it is, the significance to detoxify the glass by recovering heavy metal by the method of the present embodiment is large. In addition, the glass is, preferably a lead glass containing lead and silica. The lead glass is used in the funnel of a cathode ray tube. In recent years, a large amount of cathode ray tubes are being disposed, and the method for handling the waste lead glass is raising an issue. Here, when the method of the present embodiment is applied to the lead glass, metal can be recovered from the waste electronic substrates, as well as detoxifying the lead glass to recover lead from the lead glass. There is no particular limitation regarding the amount of silica ($SiO_2$) contained in the glass used in the present embodiment, and is 30 to 99 mass%. Specific examples are 30, 35, 40, 45, 50, 55, 60, 65, 70, 75, 80, 85, 90, 95, and 99 mass%. The amount of silica may be within the range of the two values selected from these exemplified values. The amount of the heavy metal contained in the glass by oxide conversion (PbO in a case where the heavy metal is lead) is, for example, 0.02 to 50 mass%. Specific examples are 0.02, 0.05, 0.1, 0.5, 1, 5, 10, 15, 20, 25, 30, 40, and 50 mass%. The amount of heavy metal may be within the range of the two values selected from these exemplified values.

It is preferable to melt the waste electronic substrates and the glass in a condition where the waste electronic substrates and the glass are crushed into powders. When the waste electronic substrates and the glass are melt in such condition, the waste electronic substrates and the glass are mixed easily, and thus the metal (metal simple substance or metal oxide) in the waste electronic substrates or the glass can flow and form the metal phase easily. However, it is not always necessary to crush the waste electronic substrates and the glass, and the waste electronic substrates and the glass that are not crushed can be melt, or either one of the waste electronic substrates and the glass can be crushed and melt.

The melting temperature of the waste electronic substrates and the glass is, for example, 900 to 1500°C. When the melting temperature is too low, the viscosity of the glass cannot be lowered sufficiently, thereby resulting in cases where the flow of the metal simple substance or the metal compounds becomes insufficient and formation of the metal phase becomes difficult. On the other hand, when the melting temperature is too high, consumption of the energy becomes too large. Specific examples of the melting temperature are, 900, 950, 1000, 1050, 1100, 1150, 1200, 1250, 1300, 1350, 1400, 1450, and 1500°C. The melting temperature may be within the range of the two values selected from these exemplified values. The fusing time is, for example, 0.2 to 5 hours. When the fusing time is too short, the reducing agent tends to remain as a residue, which is problematic. On the other hand, when the fusing time is too long, consumption of the energy becomes too large. Specific examples of the fusing time are, 0.2, 0.5, 1, 1.5, 2, 2.5, 3, 3.5, 4, 4.5, and 5 hours. The fusing time may be within the range of the two values selected from these exemplified values.

Crushing of the waste electronic substrates and the glass can be conducted using a ball mill or a commercially available vibrating mill. The powder comprising the crushed waste electronic substrates has a particle size of less than 1000 $\mu$m for example, preferably less than 500 pm, and more preferably less than 250 $\mu$m. The powder comprising the crushed glass has a particle size of less than 2000 $\mu$m, preferably less than 1000 $\mu$m, and more preferably less than 500 $\mu$m. Here, in the present specification, "particle size is less than X $\mu$m" means that the powder can go through a sieve having X $\mu$m mesh.

The waste electronic substrates and the glass can be melt in the presense of a reducing agent added separately from the waste electronic substrates.

When a sufficient amount of carbon to reduce the metal compounds contained in the waste electronic substrates and the glass is contained in the waste electronic substrates, it is not necessary to add the reducing agent separately. On the other hand, when the amount of carbon contained in the waste electronic substrates is not sufficient, the metal compounds can be reduced to metal effectivly by adding the reducing agent separately. There is no particular limitation regarding the type of the reducing agent, so long as the metal compounds in the waste electronic substrates and the glass can be reduced. For example, the metal compound is a powder carbon (for example, graphite). The amount of the carbon added is not particularly limited, so long as it is sufficient to reduce the metal compound. The mass ratio of the reducing agent with respect to the glass is preferably 0.005 to 0.2, and specific examples of the mass ratio are 0.005, 0.01, 0.05, 0.1, 0.15, and 0.2. The mass ratio may be within the range of the two values selected from these exemplified values. When the amount of the carbon added is too small, the reduction of the metal compound tends to become insufficient. On the other hand, when the amount is too large, the excess carbon remaining unreacted would be wasted, and the carbon left unburned would result in black glass and cinders. Then, it can cause problems during the following acid extraction process.

The waste electronic substrates and the glass can be melt in the presence of the phase separation accelerator added separately from the waste electronic substrates. The phase separation accelerator is added to from a second phase having higher solubility than the first phase having silica as the main component, the solubility being the solubility with respect to an acid solution. The type of the phase separation accelerator is not limited so long as it can achieve such object. Here, there are cases where a metal which can serve as the phase separation accelerator is contained in the waste electronic substrates. In such case, it is not necessary to add the phase separation accelerator separately. However, in a case where it is not obvious what metal is contained in the waste electronic substrates, the phase separation accelerator can be added separately to certainly form the first phase and the second phase in the glass phase. The phase separation accelerator is, for example, at least one selected from the group consisting of boron source, phosphorus source, iron source, and barium source. As the boron source, boron oxide ($B_2O_3$), boric acid ($H_3BO_3$), and sodium tetraborate ($Na_2B_4O_7$) can be mentioned for example. As the phosphorus source, phosphorus pentaoxide ($P_2O_5$), phosphoric acid ($H_3PO_4$), and sodium phosphate ($Na_3PO_4$) can be mentioned for example. As the iron source, iron (II) oxide (FeO) and iron (III) oxide ($Fe_2O_3$) can be mentioned for example. As the barium source, barium oxide (BaO) can be mentioned for example. The amount of the phase separation accelerator added shall be the amount sufficient for separating the metal by phase separation. The mass ration of the phase separation accelerator with respect to the glass is preferably 0.01 to 0.5, and specific examples are 0.01, 0.02, 0.05, 0.1, 0.15, 0.2, 0.3, 0.4, and 0.5. The mass ratio may be within the range of the two values selected from these exemplified values. When the amount of the phase separation accelerator added is too small, phase separation would become insufficient, and when the amount of the phase separation accelerator added is too large, the amount of silica being extracted during the acid extraction process would increase.

The reducing agent and the phase separation accelerator can be added before melting the waste electronic substrates and the glass, and melt together with the waste electronic substrates and the glass. Otherwise, the waste electronic substrates and the glass can be melt beforehand to prepare a melt, and then the reducing agent and the phase separation accelerator can be added into the melt. The reducing agent and the phase separation accelerator can be added at once, or can be added separately. For example, the reducing agent can be added before melting the waste electronic substrates and the glass, and the phase separation accelerator can be added into the melt.

Here, it is preferable to conduct the melting process in the presence of at least one selected from the group consisting of alkali metal (for example, Na, K), alkaline earth metal (for example, Ca), and Mg. Hereinafter, alkali metal, alkaline earth metal, and Mg are collectively referred to as "alkaline (earth) metal class". Since the alkaline (earth) metal class reduces the viscosity of the glass, flowability of the glass phase can be increased when the melting process is conducted in the presence of the alkaline (earth) metal class, thereby allowing formation of the metal phase easily. In addition, the melting temperature can be made lower, thereby reducing the energy consumption. The alkaline (earth) metal class can be contained in the raw material glass, or can be added separately. The amount of the alkaline (earth) metal class contained shall be adjusted so that the viscosity of the melt glass is adequate. For example, the mass ratio of the alkaline (earth) metal class by oxide conversion (for example, mass ratio of $(Na_2O + K_2O)$ / entire Pb glass) is, 0.02 to 1, and specific examples are 0.02, 0.5, 0.1, 0.2, 0.3, 0.4, 0.5, 0.6, 0.7, 0.8, 0.9, and 1. The mass ratio may be within the range of the two values selected from these exemplified values. When the amount of the alkaline (earth) metal class contained is too small, the increase in the flowability of the glass phase would be insufficient, and when the amount of the alkaline (earth) metal class contained is too large, the amount of silica being extracted would increase.

2. Metal Recovering Process

In the metal recovering process, the metal phase formed in the afore-mentioned melting process is separated and recovered. In the present embodiment, the waste electronic substrates are melt together with the glass. Accordingly, the metal simple substance in the waste electronic substrates would flow as it is, and the metal compounds in the waste electronic substrates and the metal oxides in the glass would be reduced to metal and flow, thereby gathering to form the metal phase. This metal phase forms a bulk at the bottom of the crucible or the heating furnace by the effect of gravity. Therefore, the metal phase can be recovered easily. Here, among the metals contained in the waste electronic substrates and the glass, many of the metals that are relatively easily reduced (Ni, In, Sb, Ag, Pd, Pt, Au, Cu, Pb and the like) are contained in the metal phase, and are thus recovered by the metal recovering process. On the other hand, among the metals contained in the waste electronic substrates and the glass, most of the metals that are relatively difficult to reduce are hardly recovered or are not recovered at all in the metal recovering process, and thus most of them are recovered in the acid extraction process.

3. Acid Extraction Process

In the glass phase obtained in the afore-mentioned melting process, the first phase having silica as the main component and the second phase having higher solubility than the first phase, the solubility being the solubility with respect to an acid solution, are contained. Most of the residual metal in the glass phase (metal not recovered in the metal recovering process) exist in the second phase.

Accordingy, in the acid extraction process, the glass phase and the acid solution are made in contact with each other, thereby allowing the second phase and the residual metal contained therein to dissolve in the acid solution, follwed by recovery of the acid solution having the residual metal dissolved therein. In such manner, the residual metal is recovered. The type of the acid solution is not particularly limited so long as it can dissolve the second phase and the residula metal, and does not dissolve the first phase. For example, the acid solution is nitric acid, hydrochloric acid, and organic acid (citric acid for example). The concentration of the acid is 1 to 5 N. The amount of the acid shall be determined depending on the solubility of the second phase and the residual metal. For example, the amount of the acid is 1 to 100 mL with respect to 1g of the glass phase.

The method for allowing the glass phase to come in contact with the acid solution is not particularly limited. The glass phase as it is (without crusing) can be immersed in the acid solution, or can be immersed in the acid solution after crusing the glass phase. The immersed glass phase can be agitated or shook. The time period for immersion can be determined depending on the concentration of the acid solution, composition of the glass and the like. For example, the time period is 6 to 36 hours. When the time period is too short, the second phase would not dissolve sufficiently, and when the time period is too long, the amount of the first phase dissolved would become large. The temperature of the acid solution is not particularly limited, and can be room temperature or can be an elevated temperature.

After allowing the glass phase and the acid solution to contact with each other, solid-liquid separation is conducted by way of filtration and the like, threby obtaining a glass phase having only the first phase and an extraction solution having the second phase and the residual metal dissolved therein. Here, the glass phase and the extraction solution are separated. In the extraction solution, various metals (for example, rare metal) that cannot be recovered by the reducing method are contained. Such various metals can be recovered from the extraction solution by way of neutralization, solvent extraction, crystallization, adsorption and the like.

In addition, when the phase separation accelerator is used, the phase separation accelerator can be recovered from the extraction solution by way of crystallization. Then, the recovered phase separation accelerator can be re-used. When the crystallization is performed, the acid solution is heated to 70 to 90°C for example, and is then allowed to come in contact with the glass phase. By allowing the acid solution to come in contact with the glass phase at such high temperature followed by cooling, the phase separation accelerator would crystallize due to the temperature dependency of the solubility. Accordingly, the crystallized phase separation accelerator is recovered by filtration and the like.

After recovering the residual metal and the phase separation accelerator from the extraction solution by the afore-mentioned method, the extraction solution can be re-used as the acid solution in the acid extraction process again. As described, the method of the present embodiment can reduce the amount of the waste to a very low level.

## EXAMPLES

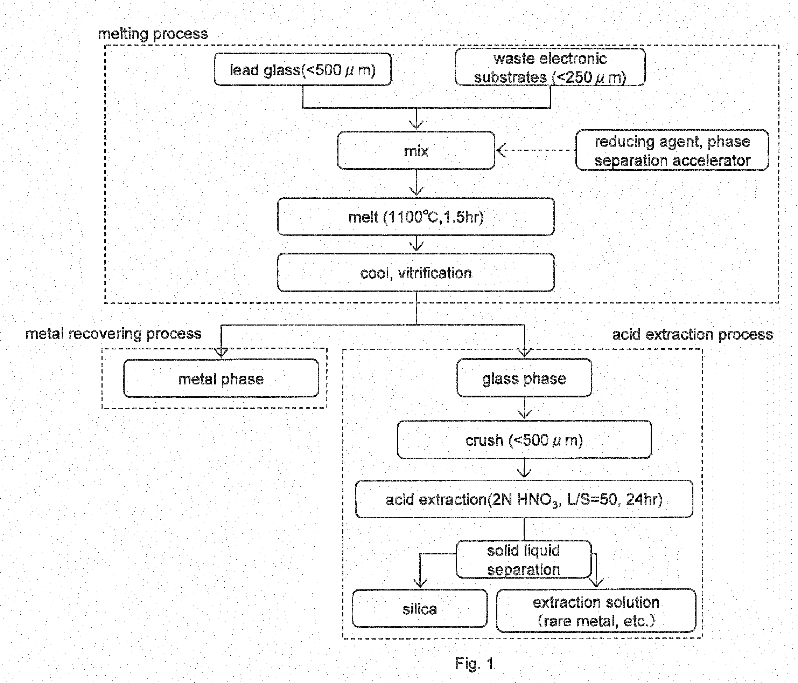

Hereinafter, Examples of the present invention will be described. In accordance with the flow chart of FIG. 1, demonstration of the recovery of metal from the waste electronic substrates was conducted. In this demonstration, the amount of the waste electronic substrates, reducing agent (carbon (carbon powder)), and phase separation accelerator ($B_2O_3$) were varied.

1. Details of Metal Recovery Demonstration

1-1. Melting Process

First, lead glass (PbO: 22.1%, $SiO_2$: 54.9%) was crushed and the crushed material was allowed to go through a sieve of 500 $\mu$m mesh to give a lead glass powder, and a waste electronic substrate derived from a personal computer was crushed and the crushed material was allowed to go through a sieve of 250 $\mu$m mesh to give a waste electronic substrate powder. The lead glass powder (5g), the waste electronic substrate powder, $B_2O_3$, carbon, and $Na_2CO_3$ were mixed in a mortar, and then the mixture was entirely transferred into an alumina crucible.

Subsequently, a lid was placed on the crucible, and the crucible was placed in a tubular electric furnace heated to 1100°C. The waste electronic substrates were melt together with the lead glass powder for 90 minutes with an air flow at 0.4 mL/min (the lid was shifted after heating for 20 minutes). Then, the crucible was taken out of the electric furnace and was cooled at room temperature.

1-2. Metal Recovering Process

Subsequently, the crucible was crushed, and the metal phase precipitated as a sphere was separated from the glass phase and was taken out.

The weight of the glass phase $M_g$ was calculated by subtracting the weight of the crucible $M_c$ and the weight of the metal phase $M_{metal}$ from the weight of the crucible and the sample after melting $M_{melted}$.

$$M_g = M_{melted} - M_c - M_{metal}$$

1-3. Acid Extraction Process

The glass phase was crushed to < 500 $\mu$m, and 0.5g of the crushed material was placed in a plastic container, followed by addition of 25 mL of 2 mol/L nitric acid. The mixture was shaken and agitated for 24 hours, followed by filtration with 1 $\mu$m membrane filter. The metal concentration of the extraction solution was analyzed by ICP-MS.

2. Method of Metal Phase and Glass Phase Analysis

2-1. Analysis of Glass Phase

The glass phase was crushed to < 500 $\mu$m, and 0.2g of the crushed material was placed in a screw cap bottle made of PFA. A solution was obtained by adding 10 mL of nitric acid and 20 mL of hydrofluoric acid into a measuring flask, followed by dilution to 100 mL with purified water. 50 mL of the diluted solution was added to the glass phase, and then the glass phase was decomposed by treating the mixture with ultrasonic waves for two hours using an ultrasonic cleaning machine. The metal concentration of the decomposed solution was analyzed by ICP-MS.

2-2. Analysis of Metal Phase

The entirety of the metal phase was placed in a plastic container, followed by addition of 20 mL of 2 mol/L nitric acid. The mixture was heated at 80°C to decompose the metal phase.

The decomposed solution was filtered with 0.45 $\mu$m membrane filter, and was then diluted to 100 mL with purified water (decomposed solution A).

The residue remaining on the membrane filter was transferred into the screw cap bottle made of PFA along with the filter, followed by addition of two fold dilution of aqua regia (20 mL). The mixture was heated to 80°C, thereby decomposing the residue completely (decomposed solution B).

The metal concentration of decomposed solution A and decomposed solution B were analyzed by ICP-MS, and the amount of metal contained in the metal phase was calculated from the results obtained.

3. Results of Analysis

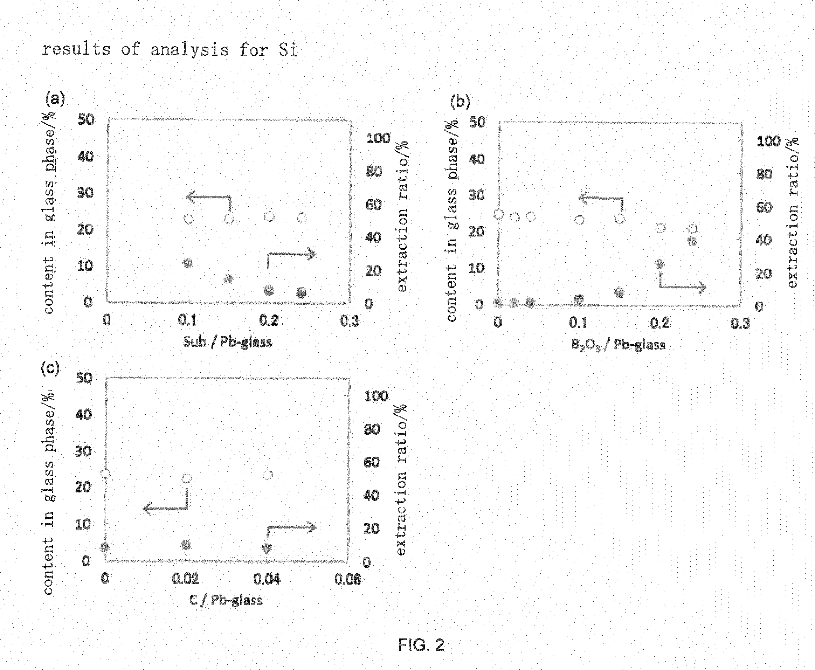

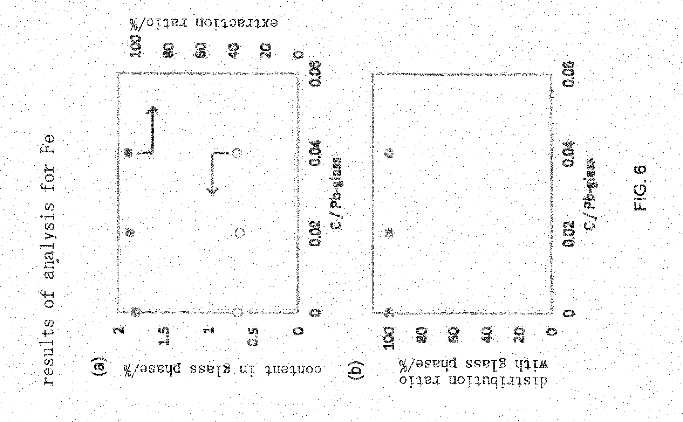

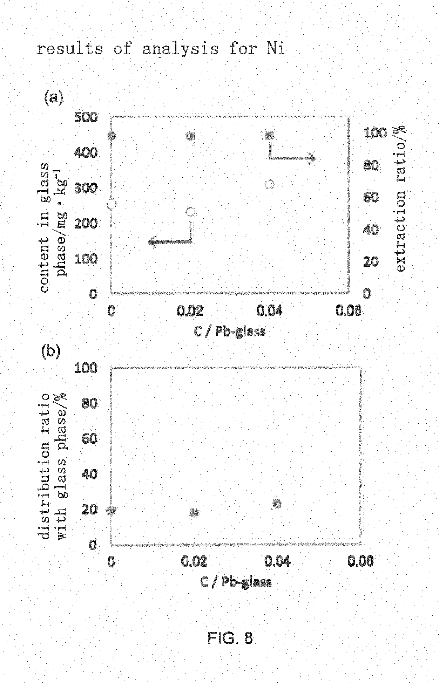

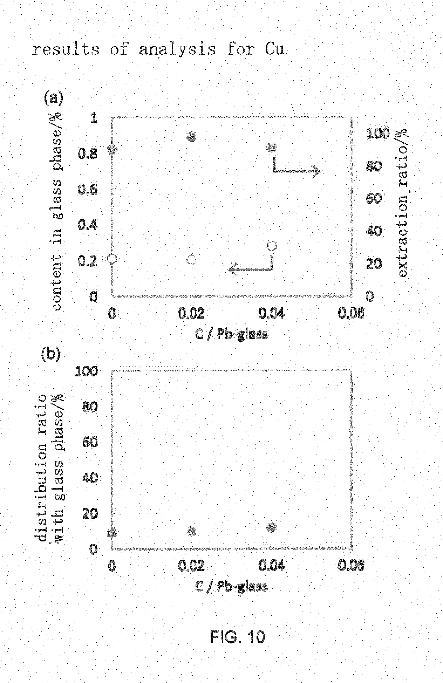

Results of the analysis for the glass phase and the metal phase are shown in FIG. 2 to FIG. 10. The meanings of the horizontal axis and the vertical axis in these figures are as follows.

Sub / Pb - glass : mass ratio of waste electronic substrates with respect to lead glass
$B_2O_3$ / Pb - glass : mass ratio of $B_2O_3$ with respect to lead glass
C / Pb - glass : mass ratio of carbon with respect to lead glass

$$\text{Extraction ratio} = (M_e/M_g) \times 100$$

$$\text{Distribution ratio with glass phase} = \{M_g / (M_g + M_m)\} \times 100$$

($M_e$ : amount of metal contained in extraction solution, $M_g$ : amount of metal contained in glass phase, $M_m$ : amount of metal contained in metal phase)

The common conditions through FIG. 2 to FIG. 10 that are not described were as follows.

$$\text{Sub} / \text{Pb} - \text{glass} = 0.2$$

$$B_2O_3 / \text{Pb} - \text{glass} = 0.15$$

$$Na_2O / \text{Pb} - \text{glass} = 0.15 \ (Na_2CO_3 / \text{Pb} - \text{glass} = \text{approximately } 0.257)$$

$$C / \text{Pb} - \text{glass} = 0$$

3-1. Results of Analysis for Si

The results of analysis for Si are shown in FIG. 2.

FIG. 2(a) shows an amount of Si contained in the glass phase and the ratio of Si extracted in the acid extraction process (Si extraction ratio) when the addition amount of the waste electronic substrates was varied. Referring to the plot shown by o, it can be understood that the increase in the addition amount of the waste electronic substrates hardly effects the amount of Si contained in the glass phase. This result shows that almost all of Si is derived from the lead glass. On the other hand, referring to the plot shown by ●, in can be understood that along with the increase in the mass ratio of the waste electronic substrates with respect to the lead glass, the extraction ratio decreases. Si is an element which should be distributed in the first phase having silica as the main component, and should not be extracted. Accordingly, it can be understood that from this point of view, the preferable mass ratio of the waste electronic substrates with respect to the lead glass is 0.2 or higher.

In FIG. 2(b), the addition amount of $B_2O_3$ was varied. Referring to the plot shown by o, it can be understood that the addition amount of $B_2O_3$ hardly effect the amount of Si contained in the glass phase. On the other hand, referring to the plot shown by ●, in can be understood that when the mass ratio of $B_2O_3$ with respect to the lead glass exceeds 0.15, the Si extraction ratio increases gradually. Here, it is preferable that the Si extraction ratio is low. Accordingly, it can be understood that from this point of view, the preferable mass ratio of $B_2O_3$ with respect to the lead glass is 0.15 or lower.

In FIG. 2(c), the addition amount of carbon was varied. Referring to FIG. 2(c), it can be understood that the addition amount of carbon hardly effect both of the amount of Si contained in the glass phase and the Si extraction ratio.

3-2. Results of Analysis for Pb

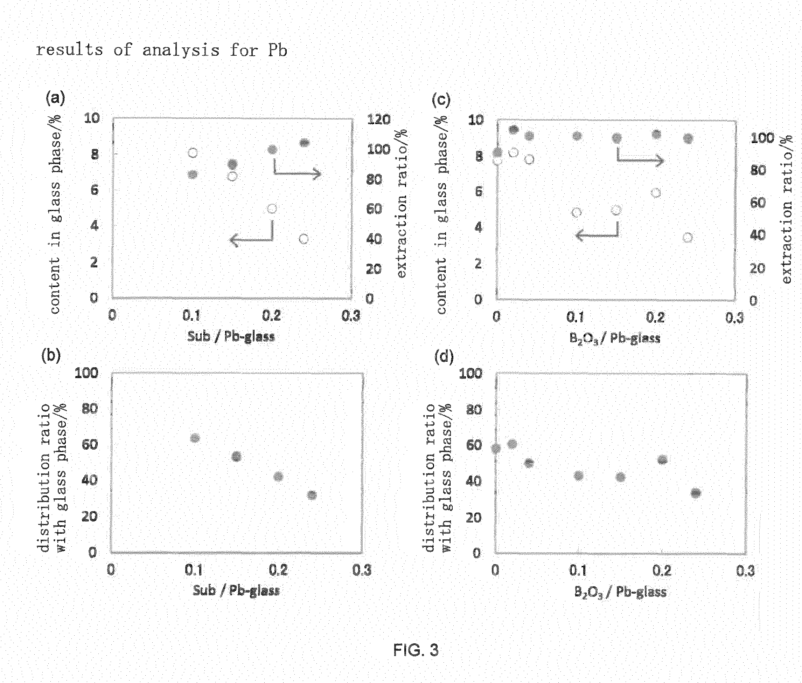

The results of analysis for Pb are shown in FIG. 3 to FIG. 4.

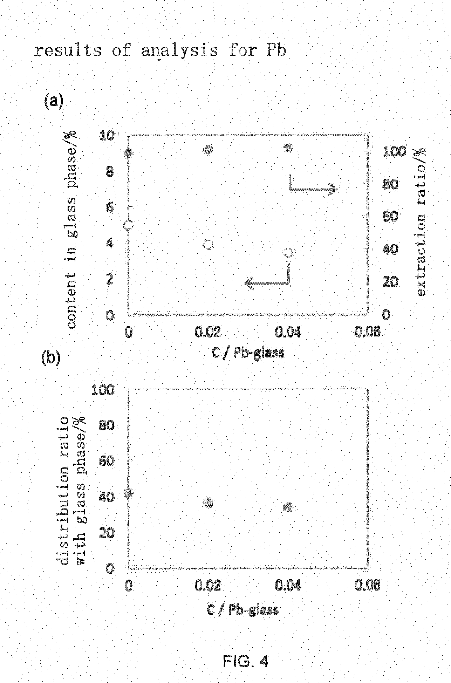

FIG. 3(a) shows an amount of Pb contained in the glass phase and the ratio of Pb extracted in the acid extraction process (Pb extraction ratio) when the addition amount of the waste electronic substrates was varied. FIG. 3(b) shows a distribution ratio of Pb with the glass phase when the addition amount of the waste electronic substrates was varied. Referring to the plot shown by ○ in FIG. 3(a) and FIG. 3(b), it can be understood that the amount of Pg contained in the glass phase and the distribution ratio with the glass phase decrease along with the increase in the addition amount of the waste electronic substrates. As the cause for such decrease, enhancement of reduction of lead oxide due to the increase in the carbon of the waste electronic substrates and the decrease in the viscosity of the glass phase by the metal contained in the waste electronic substrates resulting in the increase in the flowability of Pb to gather as the metal phase, can be mentioned. Here, as shown in FIGs. 4(a) to (b), taking into consideration that the amount of Pb contained in the glass phase and the distribution ratio of Pb with the glass phase do not decrease largely despite the increase in the addition amount of carbon, the latter (decrease in the viscosity of glass phase) is considered as the main cause. In addition, as shown in FIGs. 4(a) to 4(b), the distribution ratio with the glass phase is approximately 42% and the extraction ratio is nearly 100% even when carbon in not added at all. Such results show that the lead oxide in the lead glass was reduced by the carbon contained in the waste electronic substrates. In addition, it shows that lead in the lead glass can be recovered by utilizing the waste electronic substrates as a cost effective carbon source, regardless of whether lead as the metal to be recovered is contained in the waste electronic substrates or not.

Referring to the plot shown by ● in FIG. 3(a), in can be understood that Pb extraction ratio increases along with the increase in the addition amount of the waste electronic substrates. As the cause for such increase, existence of a metal contained in the waste electronic substrates which can serve as the phase separation accelerator, and increase in the amount of such metal serving as the phase separation accelerator along with the increase in the addition amount of the waste electronic substrates can be mentioned. In addition, it can be understood that when the mass ratio of the waste electronic substrates with respect to the lead glass is 0.2 or more, the extraction ratio reaches nearly 100%, and the residual glass (mainly the first phase having silica as the main component) is detoxified.

In FIG. 3(c) to FIG. 3(d), the addition amount of $B_2O_3$ was varied. Referring to the plot shown by ○ in FIG. 3(c) and FIG. 3(d), it can be understood that the amount of Pb contained in the glass phase and the distribution ratio of Pb with the glass phase decrease along with the increase in the addition amount of $B_2O_3$. As the cause for such decrease, decrease in the viscosity of the glass phase along with the increase in the addition amount of $B_2O_3$, resulting in the increase in the flowability of Pb to gather as the metal phase, can be mentioned. Regarding the extraction ratio, it can be understood that when the mass ratio of $B_2O_3$ with respect to the lead glass is 0.02 or more, the extraction ratio reaches nearly 100%, and the residual glass is detoxified.

3-3. Results of Analysis for Fe

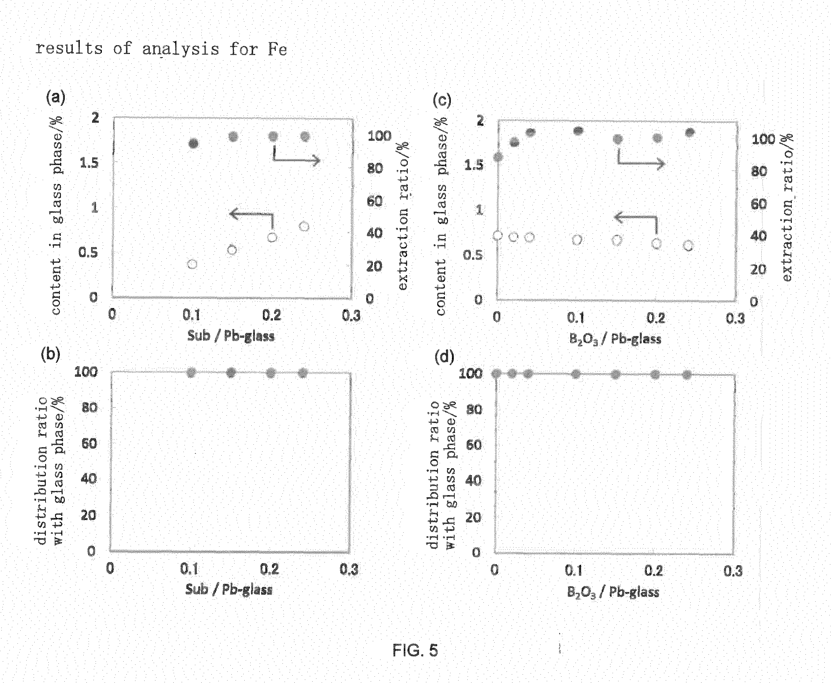

The results of analysis for Fe are shown in FIG. 5 to FIG. 6.

FIG. 5(b) shows that the distribution ratio of Fe with the glass phase is approximately 100%, regardless of the addition amount of the waste electronic substrates. In addition, Fe is not reduced in the melting process at 1100°C and nearly the entire amount is contained in the glass phase. Further, referring to the plot shown by ○ in FIG. 5(a), it can be understood that the amount of Fe contained in the glass phase increases along with the increase in the addition amount of the waste electronic substrates. In addition, referring to the plot shown by ● in FIG. 5(a), the extraction ratio of Fe is as high as approximately 90 to 100%, regardless of the addition amount of the waste electronic substrates. Further, referring to FIG. 5(c) to FIG. 5(d), the amount of Fe contained in the glass phase and the distribution ratio of Fe with the glass phase are not influenced by the addition amount of $B_2O_3$. Here, the extraction ratio of Fe is approximately 88% when $B_2O_3$ is not added, however, only a small amount of $B_2O_3$ added would raise the extraction ratio of Fe to as high as approximately 90 to 100%.

As described above, it can be understood that nearly all of Fe exists in the second phase of the glass phase, and that nearly all of Fe can be recovered easily by acid extraction. In addition, the result that the extraction ratio of Fe is extremely high suggests that oxides of Fe can serve as the phase separation accelerator.

3-4. Results of Analysis for Ni

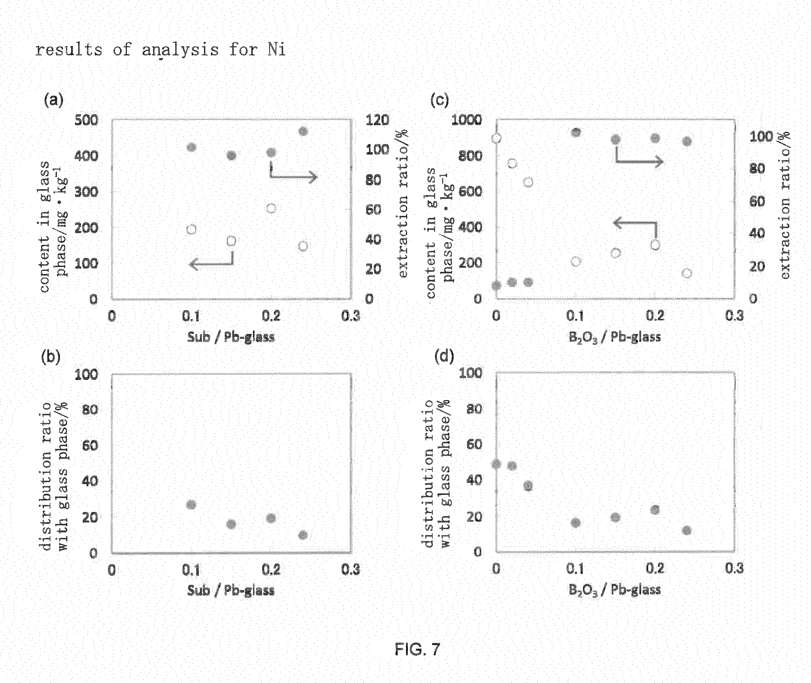

The results of analysis for Ni are shown in FIG. 7 to FIG. 8.

FIG. 7(b) shows that the distribution ratio of Ni with the glass phase decreases along with the increase in the addition amount of the waste electronic substrates. In addition, referring to the plot shown by ● in FIG. 7(c), it can be understood that the extraction ratio of Ni is low when $B_2O_3$ is not added or the addition amount of $B_2O_3$ is extremely small, however, when the mass ratio of $B_2O_3$ with respect to the lead glass becomes 0.05 or higher, the extraction ratio of Ni increases largely, and reaches approximately 100%. Further, referring to the plot shown by ○ in FIG. 7(c) and FIG. 7(d), it can be understood that when the mass ratio of $B_2O_3$ with respect to the lead glass becomes 0.05 or higher, the amount of Ni contained in the glass phase and the distribution ratio of Ni with the glass phase decreases largely. These results show that when a certain amount or more of $B_2O_3$ exists, Ni tends to transfer into the metal phase, and Ni in the glass phase tends to transfer into the second phase.

3-5. Results of Analysis for Cu

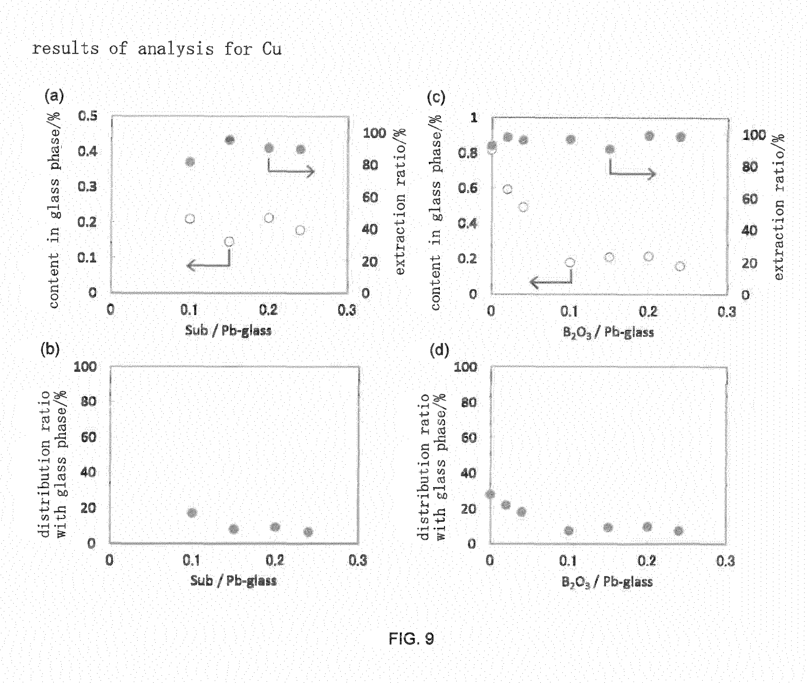

The results of analysis for Cu are shown in FIG. 9 to FIG. 10.

Cu shows similar results as with Ni in all of the amount of Cu contained in the glass phase, the distribution ratio of Cu with the glass phase, and the extraction ratio of Cu. Here, as apparent from the comparison between FIG. 7(c) to FIG. 7(d) with FIG. 9(c) to FIG. 9(d), there was a difference in that the extraction ratio of Ni was low when $B_2O_3$ is not added or the addition amount of $B_2O_3$ is extremely small, however, extraction ratio of Cu was extremely high as approximately 90% in the same condition.

3-6. Results of Analysis for Various Metals

Experiments of recovering metals under the afore-mentioned common conditions were conducted, and the amount of the metal contained in the metal phase or in the glass phase, and the extraction ratio from the glass phase were evaluated. Results are shown in Table 1.

As shown in Table 1, regarding all of the rare metals other than Ni, Pd, In, Sb and Fe, approximately all of such metals were distributed in the glass phase. In addition, although the extraction ratio from the glass phase depends on the type of the metal, many of the rare metals were able to extract from the glass phase with high extraction ratio. Accordingly, it can be understood that many of the rare metals can be separated from the waste electronic substrates into the extraction solution by the method of the present invention, and that the rare metals can be recovered by treating the extraction solution.

[Table 1]

| Table 1 | | metal phase | glass phase | | |
|---|---|---|---|---|---|
| | | content (mg/kg) | content (mg/kg) | extraction amount (mg/kg) | extraction rate (%) |
| rare metal | Cr | <1.2 | 300 | 280 | 93.7 |
| | Mn | <1.2 | 290 | 300 | 103 |
| | Co | <1.2 | <50 | 33 | – |
| | Ni | 13000 | 250 | 250 | 97.9 |
| | Ga | <1.2 | <50 | 12 | – |
| | Sr | <1.2 | 4000 | 4000 | 99.5 |
| | Zr | <1.2 | 1100 | 340 | 30.3 |
| | Nb | <1.2 | 58 | 1.2 | 2.1 |
| | Pd | 220 | <50 | 14 | – |
| | In | 23 | <50 | 12 | – |
| | Sb | 7300 | 850 | 58 | 6.8 |
| | Ba | <1.2 | 6700 | 7300 | 109 |
| | Ta | <1.2 | 1900 | 150 | 8.2 |
| | Pt | <1.2 | <50 | <0.5 | – |
| rare earth | Sc | <1.2 | 70 | 9.4 | 13.5 |
| | Y | <1.2 | <50 | 13 | – |
| | La | <1.2 | 64 | 60 | 92.9 |
| | Ce | <1.2 | 250 | 240 | 94.7 |
| | Pr | <1.2 | <50 | 13 | – |
| | Nd | <1.2 | 90 | 87 | 97.1 |
| | Sm | <1.2 | <50 | 2.4 | – |
| | Eu | <1.2 | <50 | 5.7 | – |
| | Gd | <1.2 | <50 | 10 | – |
| | Tb | <1.2 | <50 | <0.5 | – |
| | Dy | <1.2 | <50 | 2.3 | – |
| | Ho | <1.2 | <50 | 5.9 | – |
| | Er | <1.2 | <50 | 1.5 | – |
| noble metal | Ag | 2600 | <50 | 2.2 | – |
| | Au | 320 | <50 | 4.0 | – |
| others | Si | – | 240000 | 18000 | 7.8 |
| | Fe | 1.8 | 6700 | 6600 | 99.3 |
| | Cu | 250000 | 2100 | 1900 | 90.1 |
| | Pb | 810000 | 50000 | 49000 | 99.4 |

4. Comparison Examples

Only the waste electronic substrate powder prepared in "1-1. Melting Process" was heated by the method shown in "1-1. Melting Process". The glass phase and the metal phase were not formed, and an object obtained as a carbonized waste electronic substrate powder was left in the crucible, resulting in failure to recover the metal.

**Claims**

1. A method for recovering metal from waste electronic substrates, comprising the processes of:

   a melting process to form a glass phase and a metal phase by melting waste electronic substrates and a glass together, the metal phase being derived from metal contained in at least one of the waste electronic substrates and the glass;
   a metal recovering process to separate and recover the metal phase from the glass phase; and
   an acid extraction process to allow the glass phase to come in contact with an acid solution; wherein:

   the glass phase comprises a first phase having silica as the main component and a second phase having higher solubility than the first phase with respect to the acid solution; and
   the second phase is dissolved in the acid solution together with a residual metal contained in the second phase, and the acid solution having the residual metal dissolved therein is recovered in the acid extraction process.

2. The method of Claim 1, further comprising the process of a residual metal recovering process to recover the residual metal dissolved in the acid solution.

3. The method of Claim 1 or 2, wherein the melting process is conducted in the presence of a reducing agent added separately from the waste electronic substrates.

4. The method of Claim 3, wherein the reducing agent is carbon.

5. The method of any one of Claims 1 to 4, wherein the melting process is conducted in the presence of a phase separation accelerator added separately from the waste electronic substrates.

6. The method of Claim 5, wherein the phase separation accelerator is at least one selected from the group consisting of boron source, phosphorus source, iron source, and barium source.

7. The method of any one of Claims 1 to 6, further comprising the process of a phase separation accelerator recovering process to recover the phase separation accelerator from the acid solution after the acid extraction process.

8. The method of Claim 7, wherein the phase separation accelerator recovered in the phase separation accelerator recovering process is re-used.

9. The method of any one of Claims 1 to 8, wherein the melting process is conducted in the presence of at least one selected from the group consisting of alkali metal, alkaline earth metal, and Mg.

**Patentansprüche**

1. Verfahren zur Rückgewinnung von Metall aus elektronischen Abfallsubstraten, das folgende Prozesse umfasst:

   einen Schmelzprozess, um durch Schmelzen elektronischer Abfallsubstrate und eines Glases miteinander eine Glasphase und eine Metallphase auszubilden, wobei die Metallphase von Metall stammt, das in wenigstens einem aus den elektronischen Abfallsubstraten und dem Glas enthalten ist;
   einen Metallrückgewinnungsprozess, um die Metallphase von der Glasphase zu trennen und zurückzugewinnen; und
   einen Säureextraktionsprozess, um die Glasphase mit einer Säurelösung in Kontakt kommen zu lassen; wobei:

   die Glasphase eine erste Phase, deren Hauptbestandteil Siliciumdioxid ist, und eine zweite Phase mit einer höheren Löslichkeit als die erste Phase mit Bezug auf die Säurelösung umfasst; und
   die zweite Phase zusammen mit einem in der zweiten Phase enthaltenen Restmetall in der Säurelösung gelöst wird und die Säurelösung mit dem darin gelösten Restmetall in dem Säureextraktionsprozess zurückgewonnen wird.

2. Verfahren nach Anspruch 1, das ferner den Prozess eines Restmetallrückgewinnungsprozesses umfasst, um das in der Säurelösung gelöste Restmetall zurückzugewinnen.

3. Verfahren nach Anspruch 1 oder 2, wobei der Schmelzprozess in Gegenwart eines Reduktionsmittels erfolgt, das getrennt von den elektronischen Abfallsubstraten zugegeben wird.

4. Verfahren nach Anspruch 3, wobei das Reduktionsmittel Kohlenstoff ist.

5. Verfahren nach einem der Ansprüche 1 bis 4, wobei der Schmelzprozess in Gegenwart eines Phasentrennungsbeschleunigers erfolgt, der getrennt von den elektronischen Abfallsubstraten zugegeben wird.

6. Verfahren nach Anspruch 5, wobei der Phasentrennungsbeschleuniger wenigstens einer, ausgewählt aus der Gruppe bestehend aus einer Borquelle, Phosphorquelle, Eisenquelle und Bariumquelle, ist.

7. Verfahren nach einem der Ansprüche 1 bis 6, das ferner den Prozess eines Phasentrennungsbeschleuniger-Rückgewinnungsprozesses umfasst, um nach dem Säureextraktionsprozess den Phasentrennungsbeschleuniger aus der Säurelösung zurückzugewinnen.

8. Verfahren nach Anspruch 7, wobei der in dem Phasentrennungsbeschleuniger-Rückgewinnungsprozess zurückgewonnene Phasentrennungsbeschleuniger wiederverwendet wird.

9. Verfahren nach einem der Ansprüche 1 bis 8, wobei der Schmelzprozess in Gegenwart wenigstens eines, ausgewählt aus der Gruppe bestehend aus Alkalimetall, Erdalkalimetall und Mg, erfolgt.


## Revendications

1. Procédé de récupération de métal à partir des substrats électroniques de déchets, comprenant les processus suivants :

   un processus de fusion, destiné à former une phase vitreuse et une phase métallique par fusion ensemble des substrats électroniques de déchets et du verre, la phase métallique étant dérivée du métal contenu dans au moins un des substrats électroniques de déchets et le verre ;
   un processus de récupération de métal, destiné à séparer et à récupérer la phase métallique de la phase vitreuse ; et
   un processus d'extraction d'acide, destiné à permettre à la phase vitreuse d'entrer en contact avec une solution acide ;
   la phase vitreuse comprenant une première phase, comportant la silice en tant que composant principal, et une deuxième phase, présentant une solubilité supérieure à la solubilité de la première phase par rapport à la solution acide ; et
   la deuxième phase étant dissoute dans la solution acide ensemble avec un métal résiduel contenu dans la deuxième phase, et la solution acide, comportant le métal résiduel dissous dans ladite solution acide, étant récupérée lors du processus d'extraction d'acide.

2. Procédé selon la revendication 1, comprenant en outre le processus étant un processus de récupération de métal résiduel, destiné à récupérer le métal résiduel dissous dans la solution acide.

3. Procédé selon la revendication 1 ou 2, le processus de fusion étant mis en oeuvre en présence d'un agent réducteur ajouté séparément à partir des substrats électroniques de déchets.

4. Procédé selon la revendication 3, l'agent réducteur étant le carbone.

5. Procédé selon l'une quelconque des revendications 1 à 4, le processus de fusion étant mis en oeuvre en présence d'un accélérateur de séparation de phases ajouté séparément à partir des substrats électroniques de déchets.

6. Procédé selon la revendication 5, l'accélérateur de séparation de phases étant au moins un élément choisi dans le groupe constitué d'une source de bore, d'une source de phosphore, d'une source de fer et d'une source de baryum.

7. Procédé selon l'une quelconque des revendications 1 à 6, comprenant en outre le processus étant un processus de récupération d'accélérateur de séparation de phases, destiné à récupérer l'accélérateur de séparation de phases de la solution acide après le processus d'extraction d'acide.

8. Procédé selon la revendication 7, l'accélérateur de séparation de phases, récupéré lors du processus de récupération d'accélérateur de séparation de phases, étant réutilisé.

9. Procédé selon l'une quelconque des revendications 1 à 8, le processus de fusion étant mis en oeuvre en présence d'au moins un élément choisi dans le groupe constitué d'un métal alcalin, d'un métal alcalino-terreux et du Mg.

Fig. 1

melting process

waste electronic substrates (<250 μm)

reducing agent, phase separation accelerator

lead glass(<500 μm)

mix

melt (1100°C, 1.5hr)

cool, vitrification

acid extraction process

glass phase

crush (<500 μm)

acid extraction(2N $HNO_3$, L/S=50, 24hr)

solid liquid separation

extraction solution (rare metal, etc.)

silica

metal recovering process

metal phase

results of analysis for Si

FIG. 2

FIG. 3

results of analysis for Pb

(a)

(b)

FIG. 4

results of analysis for Fe

FIG. 5

EP 3 012 333 B1

results of analysis for Fe

(a)

(b)

FIG. 6

results of analysis for Ni

FIG. 7

results of analysis for Ni

(a)

(b)

FIG. 8

results of analysis for Cu

FIG. 9

FIG. 10

**EP 3 012 333 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0796264 A
- CN 102925691 A
- JP 2009226302 A

**Non-patent literature cited in the description**

- **J. CUI et al.** *Journal of Hazardous Materials,* 2008, vol. 158, 228-256